# EUROPEAN PATENT SPECIFICATION

(11) **EP 2 546 723 B1**
(45) Date of publication and mention of the grant of the patent: **20.05.2015**
(21) Application number: 12175932.8
(22) Date of filing: 11.07.2012
(51) Int. Cl.: G06F 1/16, H04M 1/06, H04M 1/21

(54) **Adapter module for portable electronic device**
Adaptermodule für tragbare elektronische Vorrichtung
Module adaptateur pour dispositif électronique portable

(30) Priority: 13.07.2011 US 201161507357 P
(43) Date of publication of application: 16.01.2013
(73) Proprietor: ASUSTeK Computer Inc., Peitou, Taipei 112 (TW)
(72) Inventor: Chuang, Chih-Hung, Peitou, Taipei 112 (TW); Hsieh, Chih-Ho, Peitou, Taipei 112 (TW)
(74) Representative: 2K Patentanwälte Blasberg Kewitz & Reichel

(56) References cited:
- EP-A2- 1 383 027
- GB-A- 2 484 394
- US-A1- 2011 111 796

## Description

### BACKGROUND OF THE INVENTION

### FIELD OF INVENTION

The present disclosure relates to an adapter module for a portable electronic device and, in particular, to an adapter module for a portable electronic device cooperating with a tablet electronic device.

### RELATED ART

Portable electronic devices, such as smart phones, have become more and more powerful and been equipped with more functions. Except for the original communication function, they are further equipped with the additional functions such as media player, video player, or browser. In particular, the smart phone is designed smaller than other portable electronic devices for being conveniently carried. Accordingly, the display screen of the smart phone is also smaller than that of the common tablet electronic device, and it is inconvenient for the user to operate with smaller display screens. For example, the video displayed by smaller display screen usually causes worse visual perception. Furthermore, it is uncomfortable for users to browse the webpage on the small display screens.

Besides, it is very common for users to own both a smart phone and a tablet computer. However, the major difference between the smart phone and tablet computer is just in their sizes (screen sizes), but their functions provided are mostly the same.

Moreover, smart phones currently include some new functions and some hardware different from the previous generation product. For example, the HDMI and audio jack can be integrated as a single module with a new interface, and the old device can not be connected to the new interface unless through an adapter. Further, the conventional adapter in a long-shape is inconvenient for being carried and which only for the adapting function. Moreover, when connecting to the smart phone, the adapter may affect the communication quality of the antenna of the smart phone.

EP 1383027A2 discloses that an electronic-apparatus system includes a main device (10), an expansion unit (20) which expands the function of the main device (10) and a cradle (30) in which the main device (10) is held when the main device transmits/receives data to/from a personal computer. A connector (13) for connecting a data-synchronizing signal line and a function-expanding signal line is provided on the bottom of the main device (10). A connector (21) and a connector (31), which are fitted into the connector (13), are provided in the expansion unit (20) and cradle (30), respectively. The expansion unit (20) has a connector (22) having the same shape as that of the connector (13). Thus, the cradle (30) can be used with the expansion unit (20) connected to the main device (10).

US 2011/111796A1 discloses that an apparatus comprises at least a first display, an end-user input interface, and a control circuit that operably couples to both this first display and this end-user input interface. The apparatus can further comprise a housing that houses these components. By one approach this housing also has a basin formed therein. This basin is of sufficient size to at least substantially fully receive a portable cellular-telephony transceiver.

### SUMMARY OF THE INVENTION

The present disclosure provides an adapter module for a portable electronic device. When connecting to the portable electronic device, the adapter module can provide additional communication function for the portable electronic device, and function as the interface between the portable electronic device and a tablet electronic device. Thus, even if the connection ports of the products in different generations are not matched, they can still be connected by selecting the proper adapter.

The present disclosure discloses an adapter module for connecting a portable electronic device with a tablet electronic device. The adapter module includes an antenna unit, a first connection interface and a second connection interface. The first connection interface is configured for electrically connecting to the portable electronic device. The second connection interface is configured for electrically connecting to the tablet electronic device. When the first connection interface is electrically connected to the portable electronic device and the second connection interface is electrically connected to the tablet electronic device, the portable electronic device transmits a signal through the antenna unit of the adapter module, and the tablet electronic device displays an output information of the portable electronic device, which is transmitted through the first connection interface and the second connection interface.

These and other features, aspects and advantages of the present invention will become better understood with regard to the following description, appended claims, and accompanying drawings.

### BRIEF DESCRIPTION OF THE DRAWINGS

- FIG. 1: is a schematic diagram showing an adapter module for a portable electronic device according to a first embodiment;
- FIG. 2: is a system block diagram of the adapter module applied with the portable electronic device;
- FIGS. 3A to 3C: are schematic diagrams of the first and second connecting portions;
- FIG. 4: is a schematic diagram showing the assembled adapter module, portable electronic device and tablet electronic device;
- FIG. 5: is a schematic diagram showing an adapter module for a portable electronic device according to a second embodiment; and
- FIG. 6: is a schematic diagram showing an adapter module for a portable electronic device according to a third embodiment.

### DETAILED DESCRIPTION OF THE INVENTION

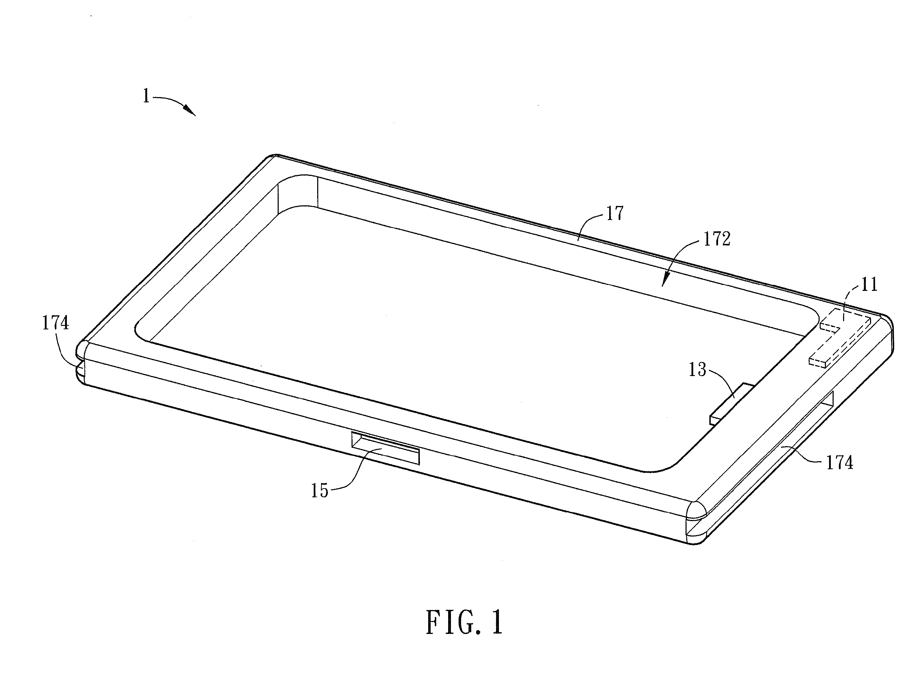

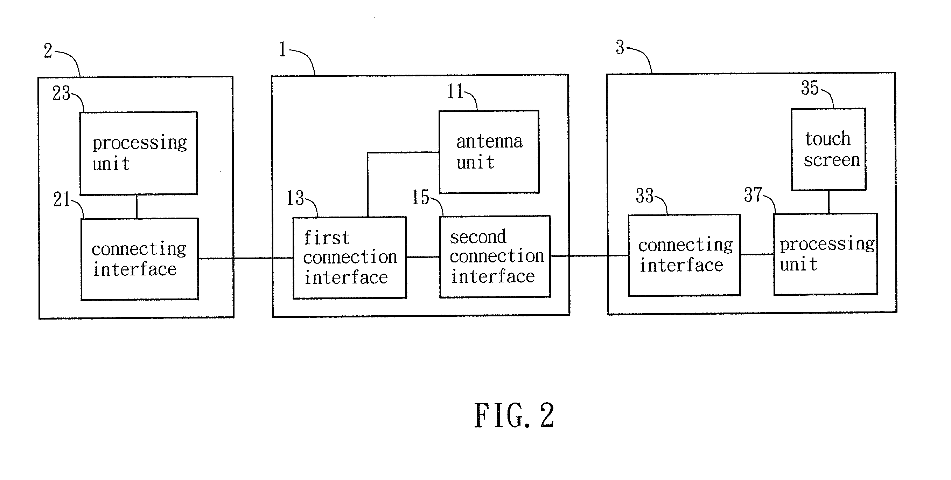

FIG. 1 is a schematic diagram showing an adapter module 1 for a portable electronic device according to a first embodiment. With reference to FIG. 1 in view of the system block diagram of FIG. 2, the adapter module 2 includes an antenna unit 11, a first connection interface 13, and a second connection interface 15.

The working band of the antenna unit 11 is the same as that of an antenna module (not shown) of the portable electronic device 2, thereby enhancing the communication quality of the antenna module of the portable electronic device 2. In practice, the working band of the antenna unit 11 may be different from that of an antenna module (not shown) of the portable electronic device 2, so that the portable electronic device 2 can establish communication in different bandwidth. Accordingly, when the user travels to different areas, which may under different bandwidth, it is still possible to use the local communication function by installing the portable electronic device 2 in the proper adapter module 1 without changing the mobile phone or SIM card to comply the local system.

The first connection interface 13 is configured for electrically connecting to the portable electronic device 2. In more specific, the first connection interface 13 is capable of electrically connecting with a connecting interface 21 of the portable electronic device 2. The connecting interface 21 is, for example but not limited to, image signal output port, audio signal output port, video signal output port, or their combinations.

For example, the connecting interface 21 of the portable electronic device 2 is a male connector, and the first connection interface 13 is a female connector. In more details, the connecting interface 21 is a male connector with 30 or 40 pins, and the first connection interface 13 is a female connector with 30 or 40 pins.

When the first connection interface 13 is electrically connected with the portable electronic device 2, the antenna unit 11 can provide the communication function. Moreover, the portable electronic device 2 can transmit a signal through the antenna unit 11 of the adapter module 1.

In more specific, the antenna unit 11 is electrically connected with the first connection interface 13, so that the portable electronic device 2 can be electrically connected with the first connection interface 13 as well as the antenna unit 11 through the connecting interface 21. Then, the portable electronic device 2 can transmit signals out through the antenna unit 11, and receive signals from the antenna unit 11.

When the portable electronic device 2 is installed in the adapter module 1, except for wired connection, the antenna unit 11 may also be connected to the first connection interface 13 by wireless connection (e.g. near field communication (NFC) connection).

Of course, no matter the wired or wireless connection is applied, the portable electronic device 2 can transmit or receive signals through the antenna unit 11, so that the working band can be simply enhanced or modified by adjusting the antenna unit 11. For example, when the original working bands of the portable electronic device 2 and the antenna unit 11 are both 900 Hz, the antenna unit 11 can properly enhance the communication quality of the portable electronic device 2. Otherwise, when the original working bands of the portable electronic device 2 include 900 and 1,800 Hz, and the working band of the antenna unit 11 is 2,700 Hz, the antenna unit 11 can provide the additional working band for the portable electronic device 2.

Thus, the portable electronic device 2 can establish communication in different working bands. Of course, the antenna unit 11 may also include multiple working bands, such as 900, 1,800, and/or 2,700 Hz, so that the user can select the needed one. The method of selecting the needed working band, for example, is approached by the application installed on the portable electronic device 2.

The second connection interface 15 is configured for electrically connecting to a tablet electronic device 3. To be noted, the drawings only show the back of the tablet electronic device 3, and the front of the tablet electronic device 3 may be configured with a touch screen 35.

In more details, the second connection interface 15 is capable of electrically connecting with a connecting interface 33 of the tablet electronic device 3. The connecting interface 33 is, for example but not limited to, image signal output port, audio signal output port, video signal output port, or their combinations. Moreover, the connecting interface 33 may also be any of the HDMI (High Defmition Multimedia interface) and audio output port.

In this embodiment, the adapter module 1 further comprises a main body 17, which is made of, for example but not limited to, metal, alloy, plastic, or rubber.

The main body 17 includes an accommodating portion 172 for receiving the portable electronic device 2. When the portable electronic device 2 is installed in the main body 17, the main body 17 can cover the entire portable electronic device 2, so that the adapter module 1 can be properly designed as a protective case for protecting the portable electronic device 2.

The main body 17 includes at least a first connecting portion 174, and the tablet electronic device 3 includes at least a second connecting portion 31 corresponding to the first connecting portion 174. The assembling of the adapter module 1 and the tablet electronic device 3 is completed by connecting the first connecting portion 174 to the second connecting portion 31.

To be noted, it is also possible to provide an adapter module 1 without configuring the main body 17.

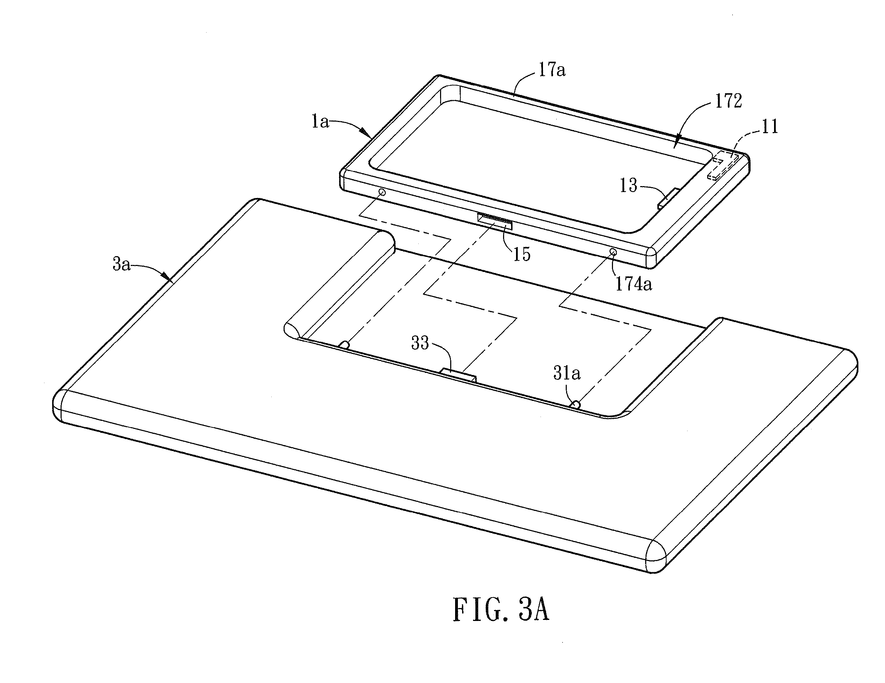

FIGS. 3A to 3C are schematic diagrams showing different aspects of connection between the first connecting portion 174a, 174b or 174c and the second connecting portion 31a, 31b or 31c. Referring to FIG. 3A, the second connecting portion 31a includes two cylindrical tenons, and the first connecting portion 174a includes two holes corresponding to the tenons. Thus, the adapter module 1a can be fixed on the tablet electronic device 3a by connecting the first connecting portion 174a with the second connecting portion 31a.

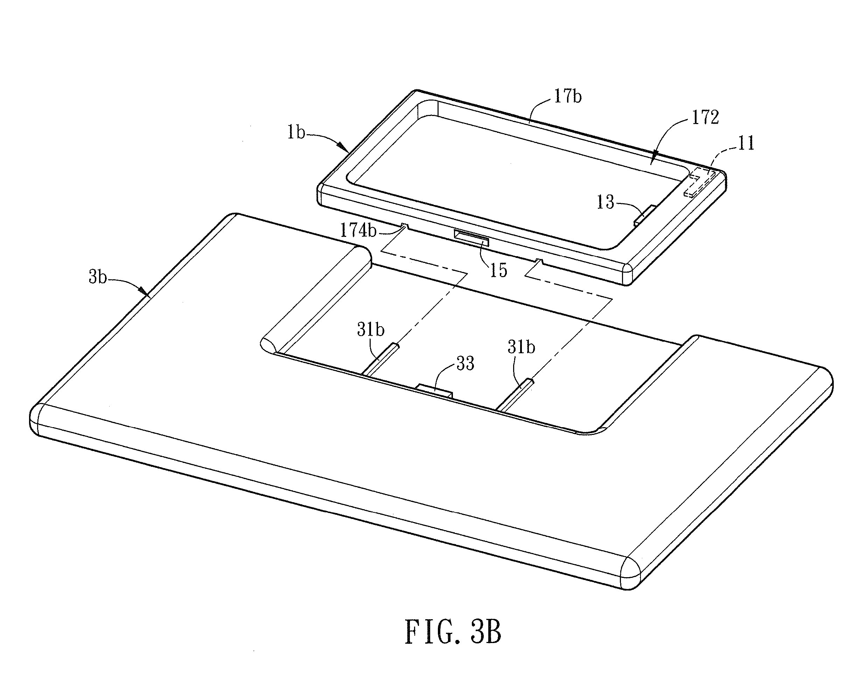

Referring to FIG. 3B, the second connecting portion 31b includes two sliding rails, and the first connecting portion 174b includes two sling grooves corresponding to the sliding rails. Thus, the first connecting portion 174b and the second connecting portion 31b can be slidingly connected. Herein, the sliding rail includes a cross-section in an "I" shape for preventing the sliding rail loosing from the sliding groove.

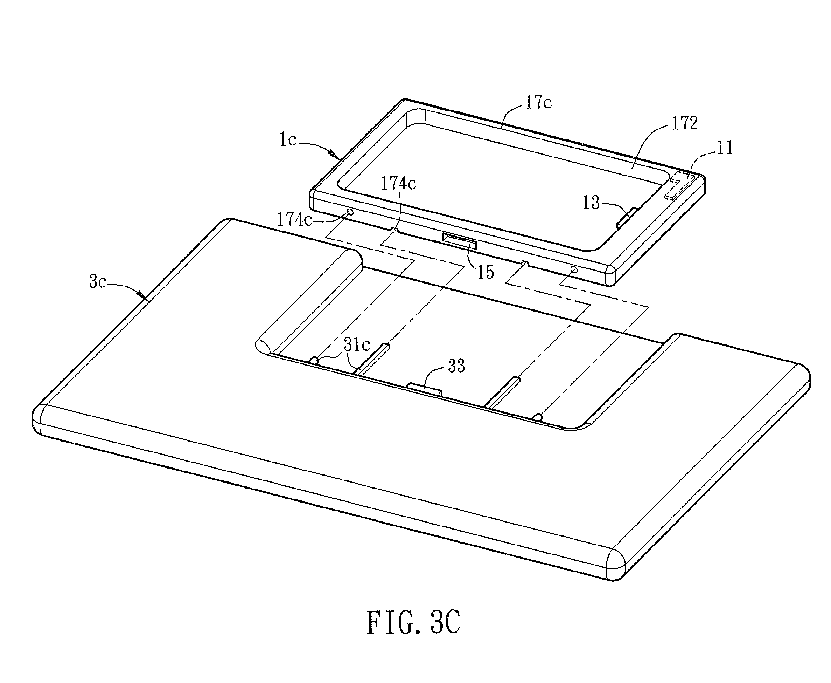

Referring to FIG. 3C, the second connecting portion 31c includes two cylindrical tenons and two sliding rails, and the first connecting portion 174c includes two holes and two sling grooves corresponding to the tenons and sliding rails. To be noted, the above aspects are used for illustrations only and are not to limit the scope of the disclosure. Of course, the first connecting portion 174 and the second connecting portion 31 can be any other structures (e.g. recesses, wedge structures, iris structure or their combinations) that can approach the desired function.

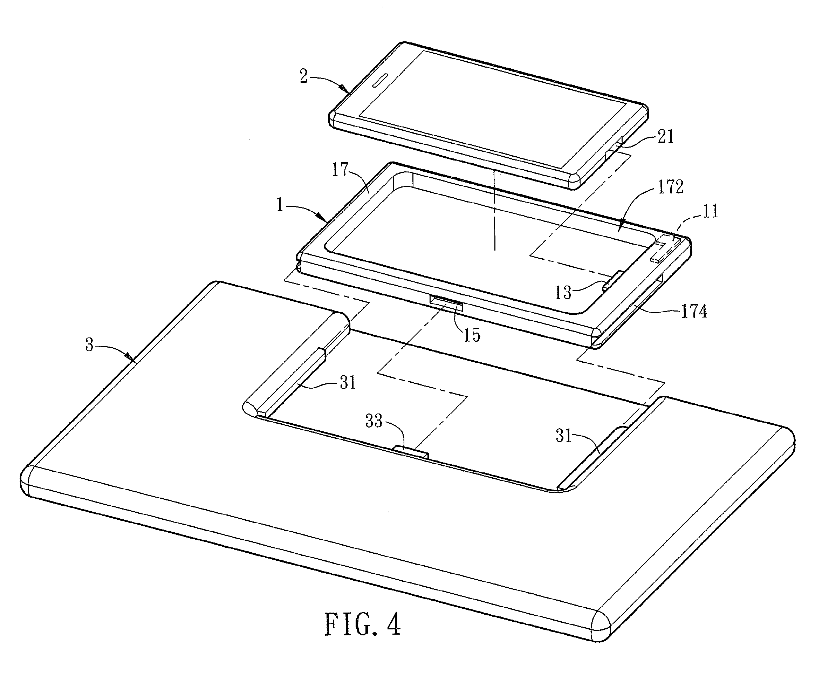

With reference to FIG. 4, when the first connection interface 13 is electrically connected to the portable electronic device 2 and the second connection interface 15 is electrically connected to the tablet electronic device 3, the tablet electronic device 3 can display an output information of the portable electronic device 2.

In more specific, the output information of the portable electronic device 2 is transmitted to the adapter module 1 through the first connection interface 13, and then transmitted to the tablet electronic device 3 through the second connection interface 15. After that, a processing unit 37 of the tablet electronic device 3 can process and output the output information.

For example, when the portable electronic device 2 plays a movie, the video information is transmitted from the portable electronic device 2 to the tablet electronic device 3 through the first connection interface 13 and the second connection interface 15. Then, the processing unit 37 processes the received video information, and then the tablet electronic device 3 outputs the video information. Accordingly, the user can watch the movie with better visual perception displayed on the larger screen of the tablet electronic device 3. In an embodiment, the output information may be, for example but not limited to, the image information (e.g. photos), audio information (e.g. music), or their combinations.

Moreover, the tablet electronic device 3 may provide touch information to the portable electronic device 2 through the second connection interface 15. In specific, when the user operates the touch screen 35 (by clicking or sliding on the screen), the processing unit 37 processes the inputted signal and then outputs the touch information. After that, the touch information is transmitted to the adapter module 1 through the second connection interface 15, and then transmitted to the portable electronic device 2 of the first connection interface 13.

A processing unit 23 of the portable electronic device 2 sequentially processes the touch information and then outputs the output information. The output information is sent back to the tablet electronic device 3 through the first connection interface 13 and the second connection interface 15. Finally, the processing unit 37 processes and outputs the output information.

That is, the user can operate the tablet electronic device 3 to control the portable electronic device 2. For example, when browsing a webpage, the user can operate the tablet electronic device 3 by touch control without directly operating the portable electronic device 2. Since the screen of the tablet electronic device 3 is larger than that of the portable electronic device 2, the operation and browsing on the tablet electronic device 3 are much convenient.

To be noted, when the portable electronic device 2 is connected to the tablet electronic device 3 through the adapter module 1, the screen of the portable electronic device 2 can be turned off. In other words, the screens of the portable electronic device 2 and the tablet electronic device 3 can be utilized by demand so as to decrease the power consumption.

In an embodiment, the tablet electronic device 3 may not have a processing module or a memory module, and it can still be operated by setting the portable electronic device 2 as the operation core after establishing their connection through the adapter module 1. This prevents the issues of duplicated components and functions in an electronic system, thereby decreasing the cost.

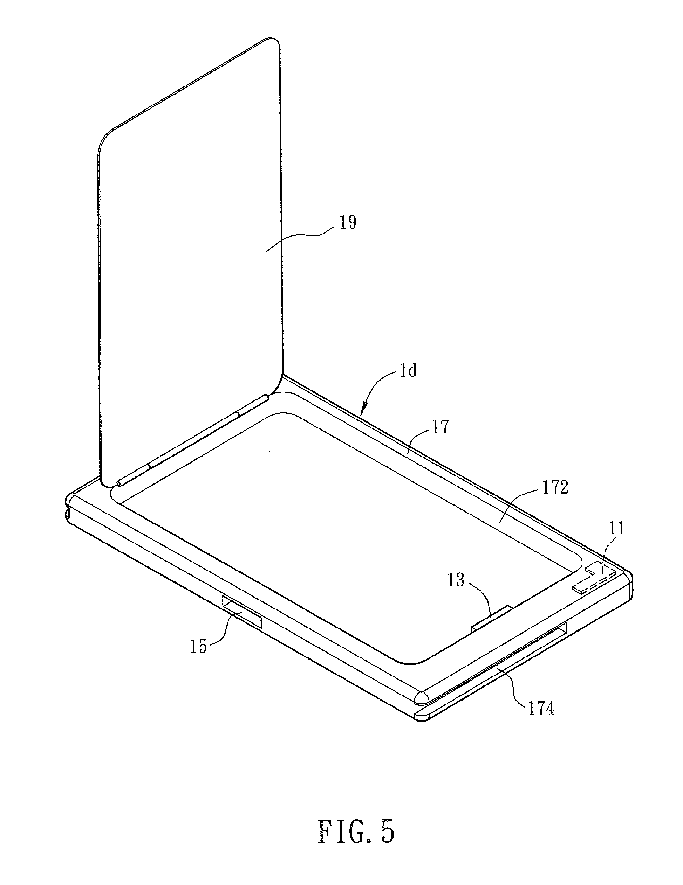

FIG. 5 is a schematic diagram showing an adapter module 1d for a portable electronic device 2 according to a second embodiment. As shown in FIG. 5, the difference between the adapter module 1 and the adapter module 1d is that the adapter module 1d further includes a cover 19 disposed on the main body 11. When the portable electronic device 2 is installed in the accommodating portion 172, the cover 19 covers the portable electronic device 2 for preventing the unintentional loosing of the portable electronic device 2.

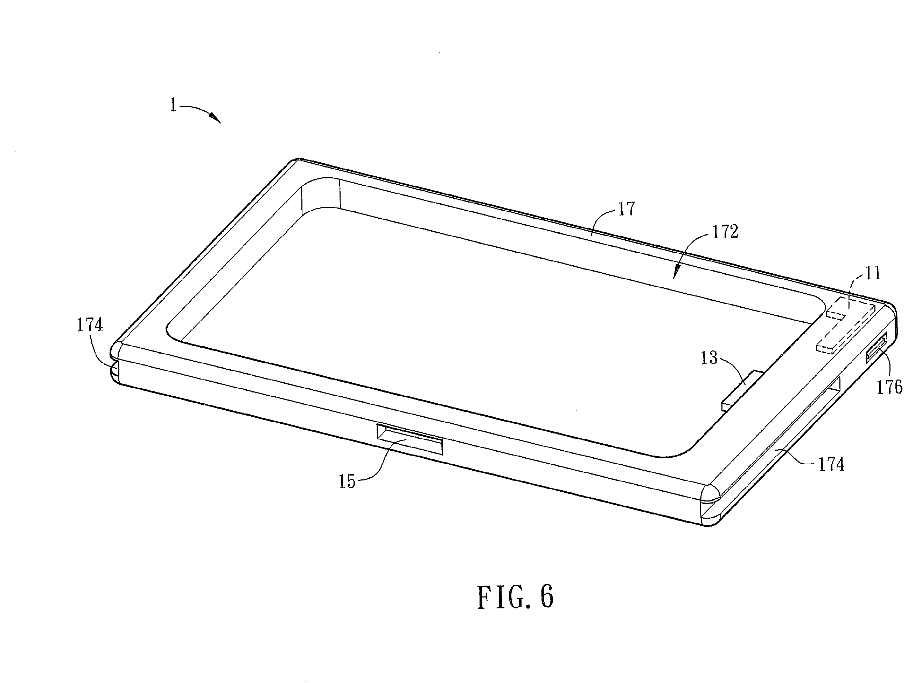

FIG. 6 is a schematic diagram showing an adapter module 1e for a portable electronic device according to a third embodiment. In this embodiment, the main body 17e of the adapter module 1e further includes an I/O port 176, which is, for example but not limited to, a USB port. In summary, the adapter module of the disclosure includes a first connection interface electrically connecting to the portable electronic device, and a second connection interface electrically connecting to the tablet electronic device. Thus, the output information of the portable electronic device can be displayed on the tablet electronic device. Furthermore, it is possible to operate the tablet electronic device to control the portable electronic device. Besides, the configuration of the antenna unit(s) can further enhance the communication quality of the portable electronic device or change the working band by demand.

In summary an adapter module for a portable electronic device is disclosed. The adapter module is applied with a tablet electronic device. The adapter module includes an antenna unit, a first connection interface and a second connection interface. The first connection interface is configured for electrically connecting to the portable electronic device. The second connection interface is configured for electrically connecting to the tablet electronic device. When the first connection interface is electrically connected to the portable electronic device and the second connection interface is electrically connected to the tablet electronic device, the portable electronic device transmits a signal through the antenna unit of the adapter module, and the tablet electronic device displays an output information of the portable electronic device.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An adapter module (1) for connecting a portable electronic device (2) with a tablet electronic device (3), the adapter module comprising;
an antenna unit (11);
a first connection interface (13) configured for electrically connecting to the portable electronic device; and
a second connection interface (15) configured for electrically connecting to the tablet electronic device;
wherein the adapter module comprises means such that, when the first connection interface (13) is electrically connected to the portable electronic device (2) and the second connection interface (15) is electrically connected to the tablet electronic device (3), the portable electronic device can transmit a signal through the antenna unit (11) of the adapter module, and the tablet electronic device can display an output information of the portable electronic device, which is transmitted through the first connection interface and the second connection interface.

2. The adapter module (1) of claim 1, wherein the adapter module (1) comprises a main body (17), and the main body has an accommodating portion (172) for accommodating the portable electronic device (2).

3. The adapter module (1) of claim 1 or 2, wherein the first connecting interface (13) is electrically connecting with a connecting interface (21) of the portable electronic device (2).

4. The adapter module (1) of one of the preceding claims, wherein the second connecting interface (15) is electrically connecting with a connecting interface (33) of the tablet electronic device (3).

5. The adapter module (1) of one of claims 2 to 4, wherein the main body (17) has at least a first connecting portion (174), and the tablet electronic device (3) has at least a second connecting portion (31) corresponding to the first connecting portion.

6. The adapter module (1) of one of the preceding claims, wherein when the first connecting interface (13) is electrically connected with the portable electronic device (2), the antenna unit (11) is electrically connected to the portable electronic device (2) through the first connecting interface (13) by wired or wireless connection.

7. The adapter module (1) of claim 6, wherein the wireless connection is a near field communication (NFC) connection.

8. The adapter module (1) of one of the preceding claims, wherein the working band of the antenna unit (11) is the same as or different from that of an antenna unit of the portable electronic device (2).

9. The adapter module (1) of one of the preceding claims, wherein the output information comprises image information, audio information, or video information.

10. The adapter module (1) of one of the preceding claims, wherein the tablet electronic device (3) provides a touch information to the portable electronic device (2) through the second connecting interface.

11. The adapter module (1) of one of claims 2 to 10, wherein the main body (17) has an I/O port.

## Patentansprüche

1. Adaptermodul (1) zur Verbindung einer tragbaren elektronischen Vorrichtung (2) mit einer elektronischen Tablet-Vorrichtung (3), wobei das Adaptermodul umfasst:
eine Antenneneinheit (11);
eine erste Verbindungsschnittstelle (13), die eingerichtet ist zum elektrischen Verbinden mit der tragbaren elektronischen Vorrichtung; und
eine zweite Verbindungsschnittstelle (15), die eingerichtet ist zum elektrischen Verbinden mit zu der elektronischen Tablet-Vorrichtung;
wobei das Adaptermodul Mittel aufweist, so dass, wenn die erste Verbindungsschnittstelle (13) elektrisch mit der tragbaren elektronischen Vorrichtung (2) verbunden ist und die zweite Verbindungsschnittstelle (15) elektrisch mit der elektronischen Tablet-Vorrichtung (3) verbunden ist, die tragbare elektronische Vorrichtung ein Signal über die Antenneneinheit (11) des Adaptermoduls senden kann, und die elektronische Tablet-Vorrichtung eine Ausgabe-Information der tragbaren elektronischen Vorrichtung anzeigen kann, die durch die erste Verbindungsschnittstelle und die zweite Verbindungsschnittstelle übertragen wird.

2. Adaptermodul (1) nach Anspruch 1, wobei das Adaptermodul (1) einen Hauptkörper (17) umfasst und der Hauptkörper einen Aufnahmeabschnitt (172) zum Aufnehmen der tragbaren elektronischen Vorrichtung (2) aufweist.

3. Adaptermodul (1) nach Anspruch 1 oder 2, wobei die erste Verbindungsschnittstelle (13) elektrisch mit einer Verbindungsschnittstelle (21) der tragbaren elektronischen Vorrichtung (2) verbunden ist.

4. Adaptermodul (1) nach einem der vorhergehenden Ansprüche, wobei die zweite Verbindungsschnittstelle (15) elektrisch mit einer Verbindungsschnittstelle (33) der elektronischen Tablet-Vorrichtung (3) verbunden ist.

5. Adaptermodul (1) nach einem der Ansprüche 2 bis 4, wobei der Hauptkörper (17) mindestens einen ersten Verbindungsabschnitt (174) aufweist, und die elektronische Tablet Vorrichtung (3) zumindest einen zweiten Verbindungsabschnitt (31) aufweist, der mit dem ersten Verbindungsabschnitt verbunden ist.

6. Adaptermodul (1) nach einem der vorhergehenden Ansprüche, wobei, wenn die erste Verbindungsschnittstelle (13) elektrisch mit der tragbaren elektronischen Vorrichtung (2) verbunden ist, die Antenneneinheit (11) elektrisch mit der tragbaren elektronischen Vorrichtung (2) über die erste Verbindungsschnittstelle (13) durch drahtgebundene oder drahtlose Verbindung verbunden ist.

7. Adaptermodul (1) nach Anspruch 6, wobei die drahtlose Verbindung eine Nahfeldkommunikations (NFC) -Verbindung ist.

8. Adaptermodul (1) nach einem der vorhergehenden Ansprüche, wobei das Arbeitsband der Antenneneinheit (11) dasselbe wie das oder verschieden von dem einer Antenneneinheit der tragbaren elektronischen Vorrichtung (2) ist.

9. Adaptermodul (1) nach einem der vorhergehenden Ansprüche, wobei die Ausgabe-Information Bild-Information, Audio-Information oder Video-Information umfasst.

10. Adaptermodul (1) nach einem der vorhergehenden Ansprüche, wobei die elektronische Tablet-Vorrichtung (3) eine Touch-Information an die tragbare elektronische Vorrichtung (2) über die zweite Verbindungsschnittstelle bereitstellt.

11. Adaptermodul (I) nach einem der Ansprüche 2 bis 10, wobei der Hauptkörper (17) einen I/O-Port aufweist.

## Revendications

1. Un module adaptateur (1) pour la connexion d'un dispositif électronique portable (2) à une tablette électronique (3), le module adaptateur comportant :
une unité d'antenne (11) ;
une première interface de connexion (13) configurée pour une connexion électrique au dispositif électronique portable ; et
une seconde interface de connexion (15) configurée pour une connexion électrique à la tablette électronique ;
dans lequel le module adaptateur comporte des moyens tels que lorsque la première interface de connexion (13) est connectée électriquement au dispositif électronique portable (2) et que la seconde interface de connexion (15) est électriquement connectée à la tablette électronique (3), le dispositif électronique portable peut transmettre un signal via l'unité d'antenne (11) du module adaptateur , et la tablette électronique peut afficher une information de sortie du dispositif électronique portable, qui est transmise via la première interface de connexion et la seconde interface de connexion.

2. Le module adaptateur (1) de la revendication 1, dans lequel le module adaptateur (1) comporte un corps principal (17), et le corps principal comporte une partie réceptacle (172) pour recevoir le dispositif électronique portable (2).

3. Le module adaptateur (1) de la revendication 1 ou 2, dans lequel la première interface de connexion est électriquement connectée à une interface de connexion (21) du dispositif électronique portable (2).

4. Le module adaptateur (1) de l'une des revendications précédentes, dans lequel la seconde interface de connexion (15) est connectée électriquement à une interface de connexion (33) de la tablette électronique (3).

5. Le module adaptateur (1) de l'une des revendications 2 à 4, dans lequel le corps principal (17) comporte au moins un premier élément de connexion (174), et la tablette électronique (3) comporte au moins un second élément de connexion (31) correspondant au premier élément de connexion.

6. Le module adaptateur (1) de l'une des revendications précédentes, dans lequel la première interface de connexion (13) est connectée électriquement au dispositif électronique portable (2), l'unité d'antenne (11) étant électriquement connectée au dispositif électronique portable (2) via la première interface de connexion (13) par des connexions cablées ou sans fil.

7. Le module adaptateur (1) de la revendication 6, dans lequel la connexion sans fil est une connexion sans fil à courte portée (NFC).

8. Le module adaptateur (1) de l'une des revendications précédentes, dans lequel la bande de travail de l'unité d'antenne (11) est la même ou est différent de l'unité d'antenne du dispositif électronique portable.

9. Le module adaptateur (1) de l'une des revendications précédentes, dans lequel l'information de sortie comporte une information image, son ou vidéo.

10. Le module adaptateur (1) de l'une des revendications précédentes, dans lequel la tablette électronique (3) fournie une information tactile au dispositif électronique portable (2) via la seconde interface de connexion.

11. Le module adaptateur (1) de l'une des revendications 2 à 10, dans lequel le corps principal (17) est un port I/O.
